# EUROPEAN PATENT SPECIFICATION

(11) **EP 0 851 149 B1**
(45) Date of publication and mention of the grant of the patent: **24.10.2001**
(21) Application number: 97310630.5
(22) Date of filing: 24.12.1997
(51) Int. Cl.: F16H 3/60, F16H 37/02

(54) **A planetary gear mechanism**
Planetengetriebe
Engrenage planétaire

(30) Priority: 26.12.1996 JP 34841096
(43) Date of publication of application: 01.07.1998
(73) Proprietor: HONDA GIKEN KOGYO KABUSHIKI KAISHA, Minato-ku, Tokyo (JP)
(72) Inventor: Kunii, Rikiya, 4-1 Chuo 1-chome, Wako-shi, Saitama-ken (JP); Shimada, Takamachi, 4-1 Chuo 1-chome, Wako-shi, Saitama-ken (JP)
(74) Representative: Piésold, Alexander J.

(56) References cited:
- EP-A- 0 556 903
- EP-A- 0 683 337
- WO-A-89/02041
- DE-A- 19 515 616
- FR-A- 1 231 219
- FR-A- 2 208 473
- GB-A- 1 008 800

## Description

The present invention relates to a planetary gear mechanism having a braking means that restricts the rotation of a ring gear according to the preamble of claim 1, as known from EP 0 556 903 A for example.

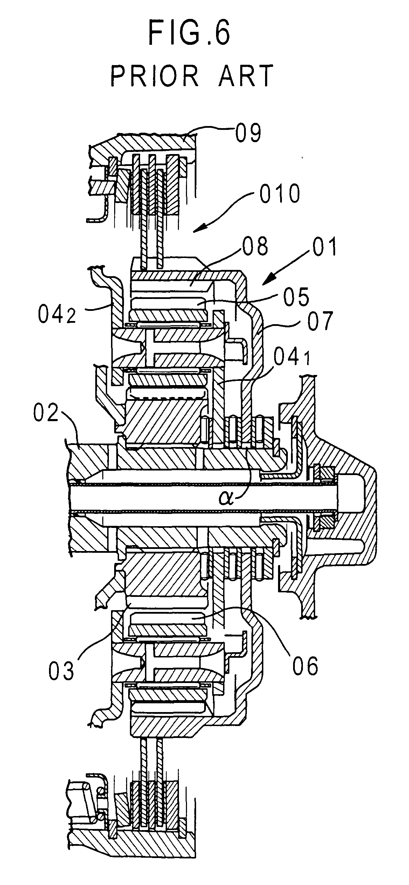

Fig. 6 shows a conventional planetary gear mechanism provided on a forward-reverse changeover mechanism of a belt-type continuously variable transmission.

The planetary gear mechanism 01 comprises a sun gear 03 splined to an input shaft 02; planetary carriers 04₁, 04₂ supported relatively rotatably on the input shaft 02; an inner pinion 05 and an outer pinion 06 supported rotatably on the planetary carriers 04₁, 04₂; a ring gear support member 07 supported relatively rotatably on the input shaft 02; and a ring gear 08 formed integrally with the ring gear support member 07. The inner pinion 05 meshes with the sun gear 03, the outer pinion 06 meshes with the ring gear 08, and the inner pinion 05 and the outer pinion 06 mesh with each other. When a vehicle is moved backward, the ring gear support member 07 and a casing 09 are coupled together by a reverse brake 010 to hold the ring gear 08 immovable.

A predetermined clearance α is formed between an inner circumference of the ring gear support member 07 and an outer circumference of the input shaft 02 to provide the ring gear 08 with an automatic aligning function, so that the ring gear support member 07 can move in the radial direction in the range of the clearance α. Hence, the ring gear 08 is automatically aligned by a reaction force from the outer pinion 06 during rotation, and when the reverse brake 010 is engaged, the ring gear 08 is moved to an automatically aligned position with respect to the input shaft 02 to maintain appropriate meshing between it and the outer pinion 06.

However, until the ring gear 08 is locked by engaging the reverse brake 010, a sufficient gear reaction force is not produced between the ring gear 08 and the outer pinion 06, and only a weak gear reaction force is actually produced by a centrifugal force acting on the ring gear 08. As a result, the alignment of the ring gear 08 by the gear reaction is not sufficient. When in this condition the reverse brake 010 engages, the ring gear 08 is fixed to the casing 09 eccentrically to the input shaft 02. This deteriorates the meshing condition between the rotating outer pinion 06 and the ring gear 08, producing noise and vibrations. Another problem is that the improper meshing between the ring gear 08 and the outer pinion 06 produces a load that degrades the durability of the mechanism. When the planetary carriers 04₁, 04₂ become eccentric by the gear reaction force that the outer pinion 06 receives from the ring gear 08 due to the improper meshing, a bending moment acts on the input shaft 02, further deteriorating the durability of the mechanism.

The present invention has been accomplished under these circumstances and its objective is to provide the ring gear of the planetary gear mechanism with an automatic alignment function and to ensure that the automatic alignment function is not lost when the ring gear is restricted.

According to the invention, there is provided a planetary gear mechanism comprising:
a shaft;
a sun gear secured to the shaft for rotation therewith;
a planetary carrier supported on the shaft for rotation relative thereto;
pinion means rotatably supported on the planetary carrier and meshing with the sun gear;
a ring gear meshing with the pinion means;
a ring gear support member supporting the ring gear so that the ring gear is rotatable relative to the shaft;
brake means operative to restrict the rotation of the ring gear;
characterised in that
said brake means is arranged to restrict the rotation of the ring gear by holding the ring gear support member against rotation;
and in that
said planetary gear mechanism further comprises :
means for mounting said ring gear support member on the shaft including means preventing relative radial movement therebetween; and
means supporting the ring gear on the ring gear support member including means permitting radial movement therebetween.

With the above configuration, because the ring gear support member is supported radially immovably on the shaft member, the ring gear support member is not radially displaced when the ring gear stops rotating. As a result, the brake means does not lock the ring gear support member in an eccentric position, thus keeping the clearance between the ring gear and the pinions constant. Further, because the ring gear is supported radially movably on the ring gear support member, the ring gear, during its rotation, is automatically aligned by the reaction force which the ring gear receives from the pinions, further improving the meshing condition between the ring gear and the pinions, and reducing noise and vibrations.

Preferably a resilient member is interposed between the ring gear support member and the ring gear.

With the above construction, because the resilient member is interposed between the ring gear support member and the ring gear, it is possible to eliminate play between the ring gear support member and the ring gear, thereby further preventing noise and vibrations.

Preferred embodiments of the invention will now be described, by way of example only, and with reference to the accompanying drawings in which:
Fig.1 is a schematic representation of a belt type, continuously variable transmission;
Fig. 2 is an enlarged view of essential portions of Fig. 1;
Fig. 3 is an enlarged cross-sectional view taken along the line 3-3 of Fig. 2; and
Fig. 4 is a graph showing the effect of this invention.
Fig. 5 is a view of a second embodiment of this invention corresponding to the essential portions of Fig. 2; and
Fig. 6 is a longitudinal cross section of a conventional planetary gear mechanism.

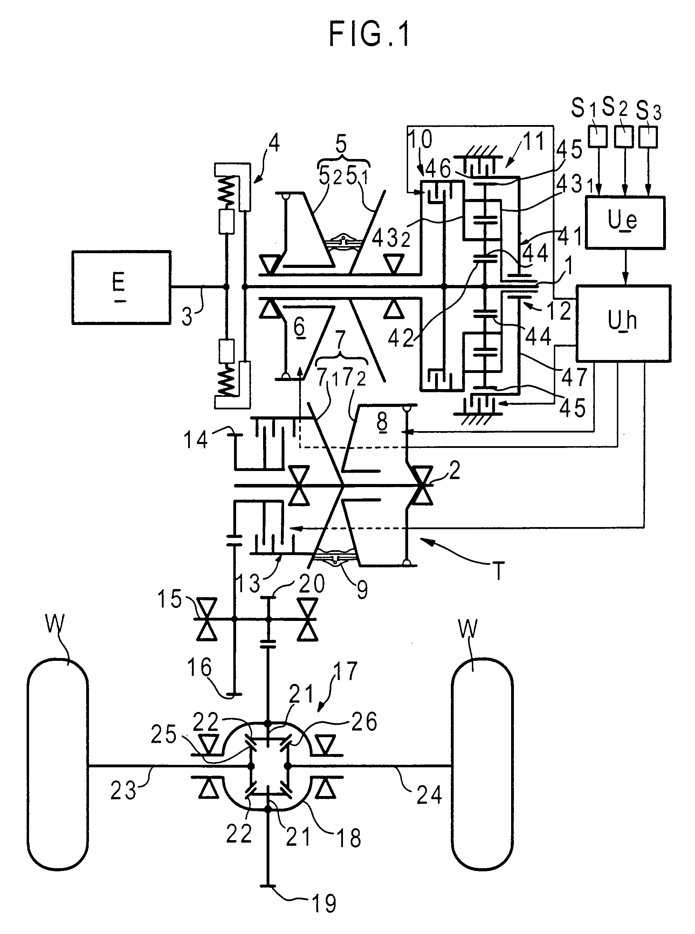

Referring to Figs. 1 to 4, a first preferred embodiment of this invention will be described.

As shown in Fig. 1, a belt-type continuously variable transmission T for vehicles has an input shaft 1 and an output shaft 2 arranged parallel to each other. A crankshaft 3 of an engine E is connected at its right end to the left end of the input shaft 1 through a flywheeled damper 4.

A drive pulley 5 supported on the input shaft 1 comprises a stationary pulley portion 5₁ rotatable relative to the input shaft 1 and a movable pulley portion 5₂ axially slidable with respect to the stationary pulley half 5₁. The movable pulley portion 5₂ is moved by the hydraulic pressure in an oil chamber 6 to change the width of a groove formed between the movable pulley portion 5₂ and the stationary pulley portion 5₁. A driven pulley 7 supported on the output shaft 2 comprises a stationary pulley portion 7₁ formed integrally with the output shaft 2 and a movable pulley portion 7₂ axially slidable with respect to the stationary pulley portion 7₁. The movable pulley portion 7₂ is moved by the hydraulic pressure in an oil chamber 8 to vary the width of a groove formed between the movable pulley portion 7₂ and the stationary pulley portion 7₁. An endless belt 9 comprising two straps having a number of press pieces attached thereto is wound around the drive pulley 5 and the driven pulley 7.

At the right end of the input shaft 1 is provided a forward-reverse changeover mechanism 12 comprising a planetary gear mechanism, which includes a forward clutch 10 that, when establishing a forward range, engages to transmit the rotation of the input shaft 1 in the same direction as the input shaft rotation to the drive pulley 5 and a reverse brake 11 that, when establishing a reverse range, engages to transmit the rotation of the input shaft 1 in a direction opposite to the input shaft rotation to the drive pulley 5.

A startup clutch 13 provided at the left end of the output shaft 2 connects a first intermediate gear 14 relatively rotatably supported on the output shaft 2 to the output shaft 2. On an intermediate shaft 15 disposed parallel to the output shaft 2 is mounted a second intermediate gear 16 that meshes with the first intermediate gear 14. A third intermediate gear 20 mounted on the intermediate shaft 15 meshes with an input gear 19 provided to a gear box 18 of a differential 17. A pair of pinions 22, 22 supported on the gear box 18 through pinion shafts 21 are meshed with side gears 25, 26 provided at ends of a left axle 23 and a right axle 24, both relatively rotatably supported on the gear box 18. The other ends of the left axle 23 and the right axle 24 are mounted with driving wheels W, W.

An electronic control unit Ue receives signals from an accelerator opening sensor S₁, a vehicle speed sensor S₂ and a reverse switch S₃ that detects when a select lever which is not shown selects a reverse range. Based on the signals from the sensors and switch, the electronic control unit Ue outputs a control signal to a hydraulic pressure control unit Uh, which controls the groove widths of the drive pulley 5 and driven pulley 7, i.e., the reduction ratio of the belt-type continuously variable transmission T, the engagement condition of the forward clutch 10, the engagement condition of the reverse brake 11, and the engagement condition of the startup clutch 13.

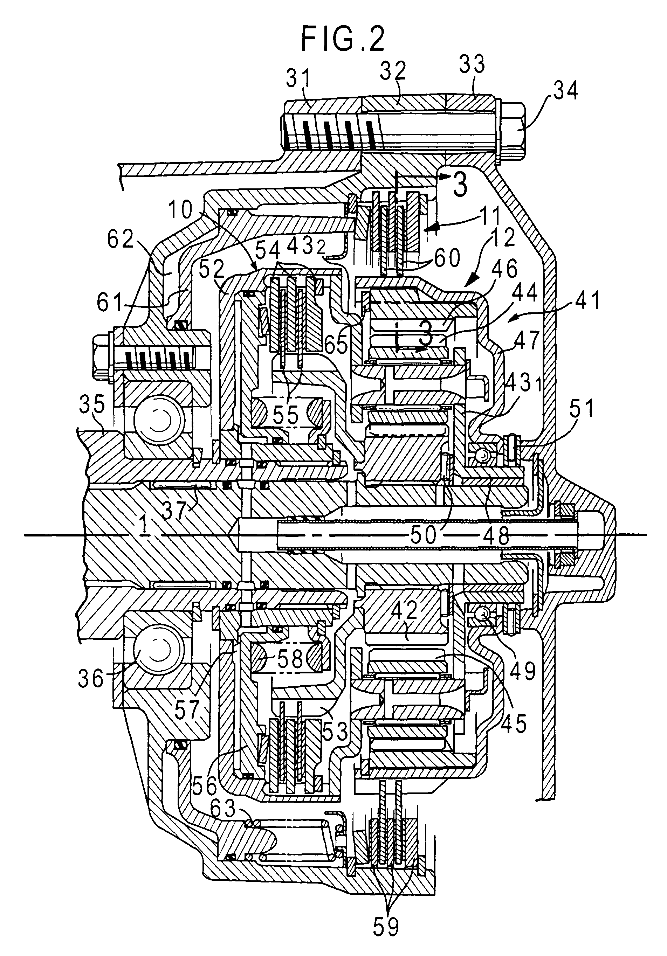

Next, the construction of the forward-reverse changeover mechanism 12 will be described referring to Fig. 2.

At the right end of the belt-type continuously variable transmission T, a center casing 31, a right casing 32 and a right cover 33 are fixed together with bolts 34. A sleeve 35 formed integrally with the stationary pulley portion 5₁ (see Fig. 1) of the drive pulley 5 is supported on the right casing 32 through a ball bearing 36. The input shaft 1 is supported inside the sleeve 35 through a needle bearing 37.

A planetary gear mechanism 41 provided at the right end of the input shaft 1 comprises a sun gear 42 splined onto the input shaft 1; planetary carriers 43₁, 43₂ formed of a pair of plates and relatively rotatably supported on the input shaft 1; three inner pinions 44 rotatably supported on the planetary carriers 43₁, 43₂ and meshing with the sun gear 42; three outer pinions 45 rotatably supported on the planetary carriers 43₁, 43₂ and meshing with the inner pinions 44; a ring gear 46 meshing with the outer pinions 45; and a ring gear support member 47 supporting the ring gear 46 relatively rotatably on an outer circumference of the input shaft 1.

A cylindrical portion 48 formed integrally with the planetary carrier 43₁ along the inner circumference of the planetary carrier 43₁ is supported on the outer circumference of the input shaft 1. On the outer circumference of the cylindrical portion 48, the inner circumference of the ring gear support member 47 is rotatably supported through a ball bearing 49. The cylindrical portion 48 of the planetary carrier 43₁ and the ring gear support member 47 are axially positioned by thrust bearings 50 and 51 with thrust bearing 50 being disposed between the sun gear 42 and the planetary carrier 43₁, and the thrust bearing 51 being disposed between the right cover 33 and the ring gear support member 47.

The forward clutch 10 comprises a clutch outer 52 secured to the sleeve 35 and the planetary carrier 43₂; a plurality of clutch plates 54 supported on the inner circumference of the clutch outer 52 so that they cannot rotate relative to the clutch outer 52 but can slide in the axial direction; a plurality of clutch discs 55 arranged alternately with these clutch plates 54 and supported on the outer circumference of a clutch inner 53 so that they cannot rotate relative to the clutch inner 53 but can slide in the axial direction; a clutch piston 56 supported axially slidably inside the clutch outer 52 and adapted to engage the clutch plates 54 with the clutch discs 55; a clutch oil chamber 57 formed between the clutch outer 52 and the clutch piston 56 to urge the clutch piston 56 in the engagement direction; and a return spring 58 to urge the clutch piston 56 in the disengagement direction.

The reverse brake 11 comprises a plurality of brake plates 59 supported on the inner surface of the right casing 32 so that they cannot rotate relative to the right casing 32 but can slide in the axial direction; a plurality of brake discs 60 arranged alternately with these brake plates 59 and supported on the outer circumference of the ring gear support member 47 so that they cannot rotate relative to the ring gear support member 47 but can slide in the axial direction; a brake piston 61 supported axially slidably inside the right casing 32 and adapted to engage the brake plates 59 with the brake discs 60; a brake oil chamber 62 formed between the right casing 32 and the brake piston 61 to urge the brake piston 61 in the engagement direction; and a return spring 63 to urge the brake piston 61 in the disengagement direction.

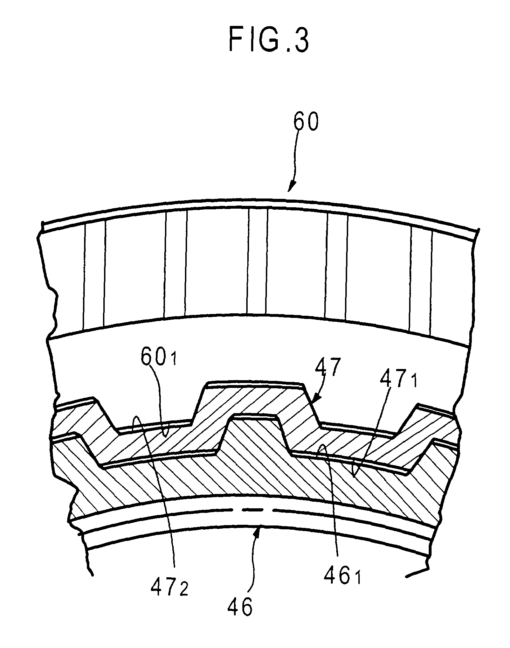

As can be seen referring also to Fig. 3, the outer circumference of the ring gear support member 47 has spline teeth 47₁, 47₂ projecting radially alternately inwardly and outwardly. Spline teeth 46₁ formed on the outer circumferential surface of the ring gear 46 mesh with the spline teeth 47₁ of the ring gear support member 47 so that the spline teeth 46₁ are not rotatable relative to the spline teeth 47₁ but are axially slidable with respect thereto. The members are kept from axially coming apart by a snap ring 65 or lock ring. These spline teeth 47₁ and 46₁ are provided with a small radial clearance between them so that the ring gear 46 can move slightly in the radial direction relative to the ring gear support member 47. Spline teeth 60₁ formed on the inner circumferential surface of the brake discs 60 mesh with spline teeth 47₂ of the ring gear support member 47 so that spline teeth 60₁ are not rotatable relative to the spline teeth 47₂ but are axially slidable with respect thereto. These spline teeth 47₂, 60₁ are similarly provided with a small radial clearance between them so that the brake discs 60 can move slightly in the radial direction relative to the ring gear support member 47.

Here will be described how the embodiment of this invention having the above construction works.

When a forward range is chosen by a select lever, the electronic control unit Ue first generates a control signal to engage the forward clutch 10 to couple the clutch inner 53 to the clutch outer 52. This causes the input shaft 1 to be coupled to the drive pulley 5 through the sun gear 42, clutch inner 53, clutch discs 55, clutch plates 54, clutch outer 52 and sleeve 35. This is followed by the engagement of the startup clutch 13 causing the torque of the engine E to be transmitted through the input shaft 1, drive pulley 5, endless belt 9, driven pulley 7, output shaft 2 and differential 17 to the driving wheels W, W, propelling the car forward.

When the reverse range is chosen by a select lever, the electronic control unit Ue generates a control signal to engage the reverse brake 11, coupling the ring gear support member 47 and the ring gear 46 to the right casing 32 to hold them unrotatable. The inner pinions 44 and the outer pinions 45 in mesh with the rotating sun gear 42 and the fixed ring gear 46 revolve around the input shaft 1 along with the planetary carriers 43₁, 43₂ while rotating on their axes. As a result, the drive pulley 5 coupled to the planetary carriers 43₁, 43₂ through the clutch outer 52 and the sleeve 35 is driven in a direction opposite to the rotating direction of the input shaft 1, thus moving the car rearward.

When the car is driven in this way, a signal from the electronic control unit Ue increases the oil pressure transmitted into the oil chamber 6 of the drive pulley 5, causing the movable pulley portion 5₂ of the drive pulley 5 to approach the stationary pulley portion 5₁ to increase the effective radius of the drive pulley 5. At the same time, the electronic control unit Ue causes the oil pressure transmitted to the oil chamber 8 of the driven pulley 7 to decrease, moving the movable pulley portion 7₂ of the driven pulley 7 away from the stationary pulley portion 7₁ to decrease the effective radius of the driven pulley 7. As a result, the reduction ratio of the belt-type continuously variable transmission T changes continuously from the Low side to the OD side.

Because the ring gear support member 47 is supported on the input shaft 1 through the ball bearing 49 and is not movable in the radial direction, it is not displaced downward by its own weight when it stops rotating but always remains coaxial with the input shaft 1. Thus, when the reverse brake 11 is engaged while the ring gear support member 47 is not rotating, the ring gear support member 47 is not coupled to the right casing 32 in such a way as to be eccentric to the input shaft 1. Hence, when the planetary carriers 43₁, 43₂ start rotating, the ring gear 46 is automatically aligned by the reaction force of the outer pinions 45 preventing improper meshing, which in turn, prevents noise and vibrations at the time of engagement of the reverse brake 11.

When the ring gear support member 47 is supported radially immovably on the input shaft 1 as described above, the automatic alignment function between the ring gear 46 and the outer pinions 45 of the conventional planetary gear system is lost. In this embodiment, however, because the ring gear 46 can move slightly in the radial direction with respect to the ring gear support member 47, the ring gear 46 is aligned by the reaction force which the ring gear 46 receives from the three outer pinions 45 reducing noise and vibrations more effectively.

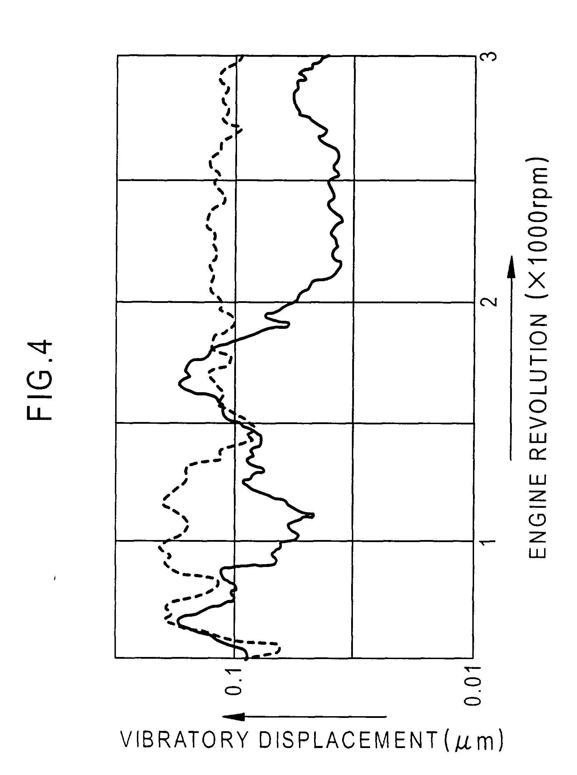

Fig. 4 shows the effect produced by this embodiment, with the abscissa marked with the engine revolution and the ordinate with the vibratory displacement in the longitudinal direction of the mount of the belt-type continuously variable transmission T. It is seen that the vibratory displacement of this embodiment shown by a solid line is smaller than that of the conventional planetary gear system (see Fig. 6) shown by a broken line.

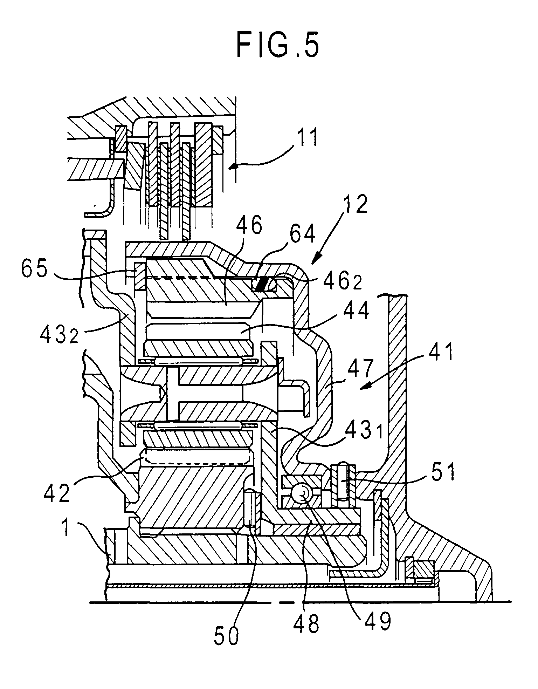

Fig. 5 shows a second embodiment of this invention. A planetary gear mechanism 41 of the second embodiment has, in contact with the inner circumference of the ring gear support member 47, a resilient member 64 installed in an annular groove 46₂ formed in the outer circumference of the ring gear 46. This construction allows the ring gear 46 to be supported radially movably on the ring gear support member 47 and at the same time prevents play between the ring gear 46 and the ring gear support member 47, further reducing noise and vibrations more effectively.

Preferred embodiments of this invention have been described and it should be understood by persons skilled in the art that various design modifications may be made without departing from the scope of the invention as claimed.

For example, while the double pinion type planetary gear mechanism has been described as an embodiment, this invention can also be applied to a single pinion type planetary gear mechanism. Although in the embodiment shown the ring gear support member 47 is supported on the cylindrical portion 48 of the planetary carrier 43₁, it may be supported directly on the input shaft 1.

## Claims

1. A planetary gear mechanism (41) comprising:
a shaft (1) ;
a sun gear (42) secured to the shaft for rotation therewith;
a planetary carrier (43₁, 43₂) supported on the shaft for rotation relative thereto;
pinion means (44, 45) rotatably supported on the planetary carrier and meshing with the sun gear;
a ring gear (46) meshing with the pinion means;
a ring gear support member (47) supporting the ring gear so that the ring gear is rotatable relative to the shaft;
brake means (11) operative to restrict the rotation of the ring gear;
**characterized in that**
said brake means is arranged to restrict the rotation of the ring gear by holding the ring gear support member against rotation;
and **in that**
said planetary gear mechanism further comprises:
means for mounting (48) said ring gear support member on the shaft including means preventing relative radial movement therebetween; and
means (46, 47) supporting the ring gear on the ring gear support member including means permitting radial movement therebetween.

2. A planetary gear mechanism according to claim 1, including a resilient member (64) interposed between the ring gear support member (47) and the ring gear (46).

3. A planetary gear mechanism according to claim 1 or 2, in which the ring gear (46) is separate from said ring gear support member (47), and intermeshing spline teeth (46₁, 47₁) are formed of said ring gear and said ring gear support member to enable said ring gear to move axially with respect to said ring gear support member.

4. A planetary gear mechanism according to claim 1, 2 or 3 in which said spline teeth (46₁, 47₁) on said ring gear (46) and said ring gear support member (47) are provided with radial clearance to enable radial movement between said ring gear and said ring gear support member.

5. A planetary gear mechanism according to any preceding claim including a lock ring (65) operative to restrict axial movement between said ring gear (46) and said ring gear support member (47).

## Patentansprüche

1. Planetengetriebemechanismus (41) umfassend:
eine Welle (1);
ein Sonnenrad (42), das an der Welle zur Drehung damit gesichert ist;
einen Planetenträger (43₁, 43₂), der an der Welle zur relativen Drehung hierzu gelagert ist;
Ritzelmittel (44, 45), die an dem Planetenträger drehbar gelagert sind und mit dem Sonnenrad kämmen;
ein Ringrad (46), das mit den Ritzelmitteln kämmt;
ein Ringradhalteelement (47), das das Ringrad derart hält, dass das Ringrad relativ zu der Welle drehbar ist;
ein Bremsmittel (11), das betreibbar ist, um die Drehung des Ringrads zu hemmen,
**dadurch gekennzeichnet,**
**dass** das Bremsmittel angeordnet ist, um die Drehung des Ringrads durch Halten des Ringradhalteelements gegen Drehung zu hemmen; und
**dass** der Planetengetriebemechanismus weiter umfasst:
Mittel zum Anbringen (48) des Ringradhalteelements an der Welle mit Mitteln, die eine relative radiale Bewegung dazwischen verhindern; und
Mittel (46, 47), die das Ringrad an dem Ringradhalteelement halten, mit Mitteln, die eine radiale Bewegung dazwischen zulassen.

2. Planetengetriebemechanismus nach Anspruch 1 mit einem elastischen Element (64), das zwischen dem Ringradhalteelement (47) und dem Ringrad (46) angeordnet ist.

3. Planetengetriebemechanismus nach Anspruch 1 oder 2, in dem das Ringrad (46) von dem Ringradhalteelement (47) getrennt ist und ineinander eingreifende Längszähne (46₁, 47₁) aus dem Ringrad und dem Ringradhalteelement gebildet sind, um zu ermöglichen, dass sich das Ringrad in Bezug auf das Ringradhalteelement axial bewegt.

4. Planetengetriebemechanismus nach Anspruch 1, 2 oder 3, in dem die Längszähne (46₁, 47₁) an dem Ringrad (46) und dem Ringradhalteelement (47) mit einem radialen Abstand versehen sind, um eine radiale Bewegung zwischen dem Ringrad und dem Ringradhalteelement zu ermöglichen.

5. Planetengetriebemechanismus nach einem der vorhergehenden Ansprüche mit einem Sperrring (65), der betreibbar ist, um eine axiale Bewegung zwischen dem Ringrad (46) und dem Ringradhalteelement (47) zu hemmen.

## Revendications

1. Engrenage planétaire (41) comprenant :
un arbre (1) ;
une roue solaire (42) fixée à l'arbre pour tourner avec celui-ci ;
un support planétaire (43₁, 43₂) supporté sur l'arbre pour tourner par rapport à celui-ci ;
des moyens formant pignons (44, 45) supportés de façon à pouvoir tourner sur le support planétaire et
s'engrenant avec la roue solaire ;
une couronne de train planétaire (46) s'engrenant avec les moyens formant pignons ;
un élément formant support de couronne de train planétaire (47) qui supporte la couronne de train planétaire de sorte que la couronne de train planétaire peut tourner par rapport à l'arbre ;
des moyens formant freins (11) agissant pour limiter la rotation de la couronne de train planétaire,
**caractérisé en ce que**
lesdits moyens formant freins sont disposés pour limiter la rotation de la couronne de train planétaire en maintenant l'élément formant support de train planétaire à l'encontre de la rotation ;
et **en ce que** ledit engrenage planétaire comprend en outre :
des moyens de montage (48) dudit élément de support de train planétaire sur l'arbre comprenant des moyens qui empêchent le mouvement radial relatif entre les deux ; et
des moyens (46₁, 47₁) qui supportent la couronne de train planétaire sur l'élément formant support de couronne de train planétaire comprenant des moyens qui permettent un mouvement radial entre les deux.

2. Engrenage planétaire selon la revendication 1, comprenant un élément résilient (64) interposé entre l'élément formant support de couronne de train planétaire (47) et la couronne de train planétaire (46).

3. Engrenage planétaire selon la revendication 1 ou 2, dans lequel la couronne de train planétaire (46) est séparée dudit élément formant support de couronne de train planétaire (47), et des dents cannelées s'engrenant (46₁, 47₁) sont formées de ladite couronne de train planétaire et dudit élément formant support de couronne de train planétaire pour permettre à ladite couronne de train planétaire de se déplacer axialement par rapport audit élément formant support de couronne de train planétaire.

4. Engrenage planétaire selon la revendication 1, 2 ou 3, dans lequel lesdites dents cannelées (46₁, 47₁) situées sur ladite couronne de train planétaire (46) et ledit élément formant support de couronne de train planétaire (47) sont prévus avec un évidement radial pour permettre un mouvement radial entre ladite couronne de train planétaire et ledit élément formant support de couronne de train planétaire.

5. Engrenage planétaire selon n'importe quelle revendication précédente comprenant un anneau de serrage (65) agissant pour limiter le mouvement axial entre ladite couronne de train planétaire (46) et ledit élément formant support de couronne de train planétaire (47).
